Europäisches Patentamt

European Patent Office

Office européen des brevets

(11) Veröffentlichungsnummer: **0 317 856 B1**

# EUROPÄISCHE PATENTSCHRIFT

(45) Veröffentlichungstag der Patentschrift: **11.11.92**

(21) Anmeldenummer: **88118913.8**

(22) Anmeldetag: **12.11.88**

(51) Int. Cl.⁵: **B60S 1/34**

(54) Wischarm, insbesondere für Kraftfahrzeug-Scheibenwischeranlagen.

(30) Priorität: **21.11.87 DE 3739510**

(43) Veröffentlichungstag der Anmeldung:
**31.05.89 Patentblatt 89/22**

(45) Bekanntmachung des Hinweises auf die
Patenterteilung:
**11.11.92 Patentblatt 92/46**

(84) Benannte Vertragsstaaten:
**ES FR GB IT SE**

(56) Entgegenhaltungen:
**EP-A- 0 207 364**
**DE-A- 2 413 620**
**DE-A- 3 329 146**
**US-A- 1 851 791**
**US-A- 3 161 902**

(73) Patentinhaber: **SWF Auto-Electric GmbH**
**Stuttgarter Strasse 119 Postfach 135**
**W-7120 Bietigheim-Bissingen(DE)**

(72) Erfinder: **Egner-Walter, Bruno**
**Käferflugstrasse 43**
**W-7100 Heilbronn(DE)**
Erfinder: **Prohaska, Hans**
**Nelkenweg 44**
**W-7120 Bietigheim-Bissingen(DE)**
Erfinder: **Schmid, Eckhardt**
**Heilbronner Strasse 62**
**W-7129 Brackenheim(DE)**
Erfinder: **Scholl, Wolfgang**
**Forststrasse 29**
**W-7121 Gemmrigheim(DE)**

# Beschreibung

Die Erfindung betrifft einen Wischarm mit den im Oberbegriff des Anspruchs aufgeführten Merkmalen.

Ein solcher Wischarm ist beispielsweise aus der US-PS 2 365 251 bekannt. Hier ist das Befestigungsteil haubenartig ausgebildet und mit einer zylindrischen und damit im Querschnitt vollständig runden, als Sackloch ausgebildeten Ausnehmung versehen, die innen längsgerichtet ist. Das Befestigungsteil ist auf einen außen entsprechend gerillten Zylinder aufgesetzt, der das Wischerwellenende darstellt. Gehalten wird das Befestigungsteil auf dem Wischerwelleende mittels einer Schraubenfeder, die außerdem zur Erzeugung des Anpreßdrucks des Wischblatts an der Scheibe dient. Die Feder stützt sich einerseits an dem in bekannter Weise um eine als Bolzen ausgebildete Schwenkachse schwenkbar gelagerten Teil des Wischarms, das üblicherweise als Gelenkteil bezeichnet wird, und andererseitets über einem Bügel, welcher um einen Bolzen drehbar am Befestigungsteil gelagert ist und in der Wischerbetriebsstellung mit einer Nase am Wischerwellenende ab. Dieses wird dadurch nach oben in das Befestigungsteilloch gedrückt, wodurch ein sicherer Halt bewirkt werden soll. Das Sackloch wird zwar seitlich und hinten von einer höher als das Wischerwellenenende ausgebildeten runden Wand begrenzt, an der dem Gelenkteil zugekehrten Seite jedoch nur von einer sehr kurzen Vorderwand. Somit ist zu befürchten, daß der Halt des Befestigungsteils auf dem Wischerwellenende nicht genügend ist. Außerdem ist ein nachträgliches Einstellen des Wischarms gegenüber der Wischerwelle zum Ausgleichen von fahrzeugbedingten Lagetoleranzen der Wischerparkstellung der Wischerwellenlage und/oder der Wischfeldlage, nur nach dem Lösen des Wischarms vom Wischerwellenende möglich, wenn man nicht eine Beschädigung der Verzahnungen und danach eine Beeinträchtigung der Drehmomentübertragung von der Wischwelle auf den Wischarm in Kauf nehmen will.

Aufgabe der Erfindung ist es, einen Wischarm der eingangs genannten Art zu schaffen, der sicher auf der Wischerwelle hält, dessen Lage auf der Wischerwelle aber problemlos ein- bzw. nachgestellt werden kann. Dabei sollen der Wischarm und die Wischerwelle möglichst problemlos ihre üblichen und vorzugsweise noch Zusatzaufgaben erfüllen können.

Erfindungsgemäß wird hierzu ein Wischarm vorgeschlagen, welcher neben den im Oberbegriff des Anspruchs 1 aufgeführten Merkmalen die im kennzeichnenden Teil des Anspruchs 1 aufgeführten Merkmale aufweist. Der Wischarm und die Wischerwelle sind hier an einer Seite über eine Art Kugelgelenk miteinander verbunden, so daß prinzipiell eine vielfältige Lagekorrektur der beiden Bauteile möglich ist. So ist zumindest ein Gegeneinanderverschwenken der beiden Bauteile in Wischerwellenradialrichtung möglich, wenn sie an dem dem kugeligen Bereich gegenüberliegenden runden Bereich zylindrisch ausgebildet sind. Wenn sie dort und eventuell auch an den kugeligen Bereichen, wie in Anspruch 11 vorgeschlagen, konisch ausgebildet bzw. geneigt sind, ist prinzipiell auch ein Einstellen der Lage des Befestigungsteils gegenüber der Wischerwelle durch Verkippen um einen auf deren geometrischer Achse liegenden Punkt, also ein Einstellen der Neigung des Befestigungsteils gegenüber der Wischerwelle möglich. Die Ränder der Kugelschale begrenzen und sichern dabei neben der (den) Klemmverbindunge-(en) die Lage des Befestigungsteils und damit des Wischarms auf der Wischerwelle.

In den Ansprüchen 2 bis 5 sind Ausgestaltungen aufgezeigt, die sich positiv auf das Maß der Gegeneinanderverschwenkbarkeit des Befestigungsteils und des der Wischerwelle zugehörigen Teils und damit auf das Maß der Lagekorrektur auswirken.

Wenn die in Anspruch 6 aufgezeigte Maßnahme verwirklicht wird, wird gegenüber der ebenfalls möglichen Ausstattung des Befestigungsteils mit einem kugelförmigen Ansatz eine Materialersparnis beim Befestigungsteil erreicht. Somit behält es im wesentlichen die bekannte Form (nur mit Ausnehmung) und kann außerdem kostengünstig aus hochwertigem Material gefertigt werden.

Die in Anspruch 7 aufgezeigte Maßnahme ermöglicht eine preiswerte erfindungsgemäße Ausgestaltung der Wischerwelle.

Ein besonders sicherer Halt des Befestigungsteils auf der Wischerwelle kann durch eine oder mehrere der in den Ansprüchen 8 bis 12 aufgezeigten Ausgestaltungen erreicht werden. Dabei wird bei der in Anspruch 9 aufgezeigten Ausgestaltung auf einfache Weise ein sehr sicherer Halt durch Klemmung erreicht.

Weiterhin kann das Befestigungsteil, wie in Anspruch 13 aufgezeigt, mittels einer Anpreßdruckfeder auf der Wischerwelle gehalten werden, die auch für den Anpreßdruck des Wischblatts an der zu reinigenden Scheibe sorgt. In den Ansprüchen 14 bis 19 sind vorteilhafte konstruktive Ausgestaltungen dazu aufgezeigt.

Die in Anspruch 15 aufgezeigte Ausgestaltung gewährleistet eine sichere Führung der Feder. In Anspruch 16 ist aufgezeigt, wie das Befestigungsteil ohne konstruktive Änderung mittels Verwendung der üblichen Schwenkachse als ein Auflagepunkt für die Feder und somit auf besonders einfache Weise auf der Wischerwelle gehalten werden kann.

Die in Anspruch 17 aufgezeigte Ausgestaltung ermöglicht eine sichere, stilistisch vorteilhafte (weil beim Blick auf das Fahrzeug unsichtbare) Beaufschlagung des Gelenkteils und damit des Wischblatts mittels der Feder.

Wenn Anspruch 18 verwirklicht wird, erfolgt die Krafteinleitung in das Gelenkteil beidseitig dessen gedachter Längsachse, was sich positiv auf die vorgesehene Lage des Gelenkteils und damit des Wischblatts auswirkt. Außerdem kann durch die Verteilung der Krafterzeugung auf zwei Federn die Wischarmbauweise im Gelenkteilbereich niedrig gehalten werden.

Bei der in Anspruch 19 aufgezeigten Ausgestaltung wird die Feder zu einer weiteren wichtigen Aufgabe herangezogen.

Die in Anspruch 20 vorgeschlagene Waschflüssigkeitsführung im Befestigungsbereich von Wischerwelle und Wischarm erlaubt eine Naßreinigung der zu reinigenden Scheibe bei unterschiedlichen Lageeinstellungen von Wischarm-Befestigungsteil und Wischerwelle. Dabei wird die Waschflüssigkeit hier geschützt im Innern geführt. Zuvor, d. h. von dem (den) Waschflüssigkeitsbehälter(n) zum Befestigungsbereich kann die Waschflüssigkeitsführung z.B. seitlich der eigentlichen Wischerwelle in dem zuvor beschriebenen, beispielsweise an dieser angespritzten Teil vorgesehen werden. Dann ist aber eine relativ lange, unter Umständen freistehend aus der Fahrzeugkarosserie zum Befestigungsbereich von Wischerwelle und Wischarm zu führende, mit der Wischerwelle pendelnde Schlauchleitung nötig. Wenn hingegen die in Anspruch 22 vorgeschlagene Weiterbildung verwirklicht wird, ist eine solche Schlauchleitung entbehrlich.

Die in Anspruch 23 vorgeschlagene Weiterbildung vermeidet jegliche Korrosionsgefährdung etc. metallischer Wischerwellen- bzw. Wischarmteile durch die Waschflüssigkeit und ermöglicht demgemäß die Verwendung wenig hochwertiger Materialien z. B. bei der Wischerwelle. In dieser kann dann z. B. durch Einspritzen von Kunststoff oder durch Einlegen eines Kunststoffrohres ihr Waschflüssigkeitskanalbereich verkörpert werden.

Die Verwirklichung von Anspruch 24 ermöglicht den Anschluß von Schlauchleitungen, die z. B. zu an der Wischstange und/oder am Wischblatt angeordneten Düsen führen. Dadurch kann ohne eine erhöhte Gefahr der Ablenkung der Waschflüssigkeitsstrahlen durch den Fahrtwind die Scheibe naß gereinigt werden. Zusätzlich zu einer solchen Düsenanordnung kann die in Anspruch 25 vorgeschlagene Anordnung verwirklicht werden, und zwar derart, daß hierdurch andere Scheibenbereiche benetzt werden als durch die Düsen an der Wischstange und/oder am Wischblatt. Andererseits ist es auch möglich, die in Anspruch 25 aufgezeigten düsen zusätzlich oder allein zur Benetzung des üblichen Scheibenbereichs vorzusehen.

Weitere vorteilhafte Einzelheiten und Ausgestaltungen der Erfindung sind aus den übrigen Unteransprüchen sowie der nachfolgend erläuterten Zeichnung ersichtlich, die zwei Ausführungsbeispiele zeigt. Dabei ist dargestellt in:

Fig. 1 ein erfindungsgemäßer Wischarm auf einer erfindungsgemäßen Wischerwelle montiert im Längsschnitt, in

Fig. 2 eine Schittansicht entlang der Linie II-II in Fig. 1 und in

Fig. 3 ein Längsschnitt durch eine zweite Ausführungsform.

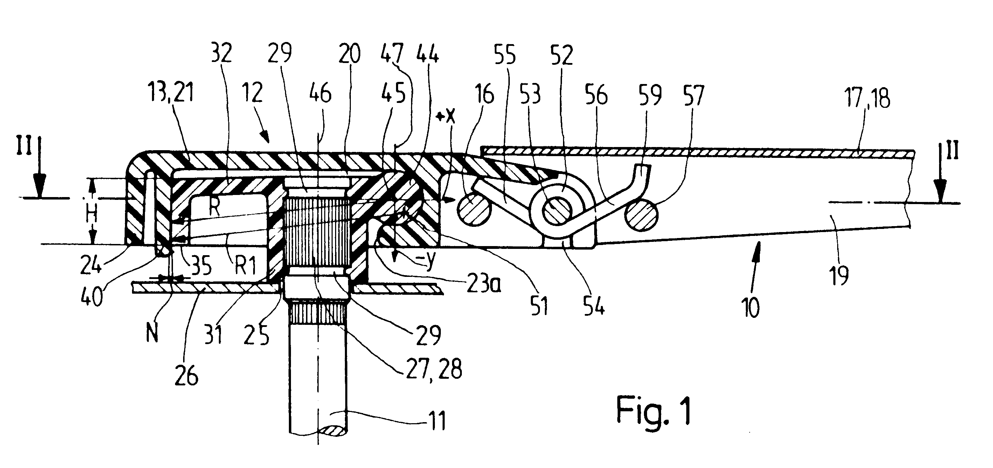

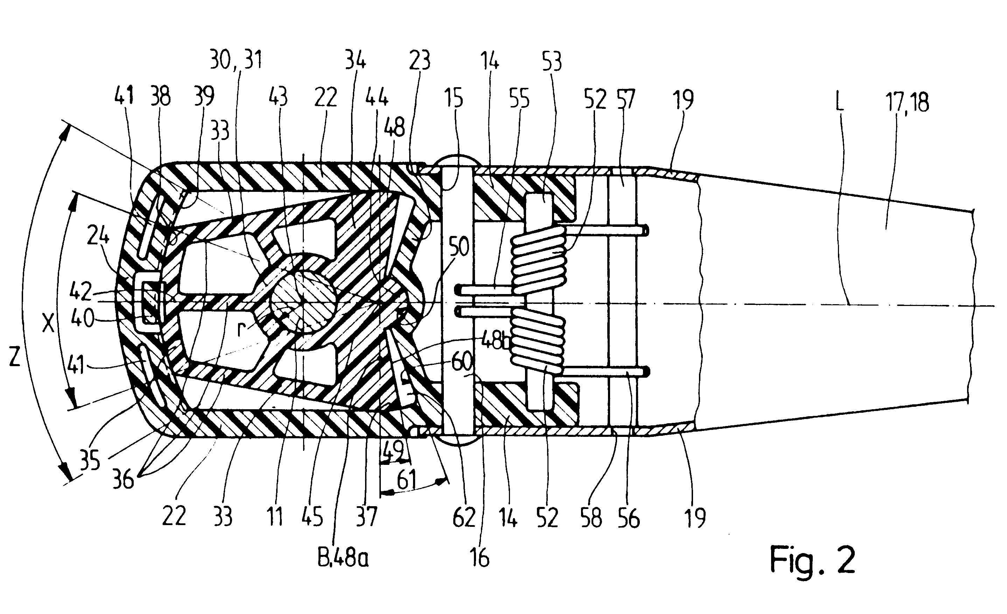

Der in den Fig. 1 und 2 dargestellte, an einer Kraftfahrzeug-Scheibenwischeranlage vorgesehene Wischarm 10 besitzt ein auf eine aus einem Stahl bestehende Wischerwelle 11 aufklemmbares Befestigungsteil 12 aus einem federelastischen Kunststoff. Das Befestigungsteil 12 besitzt einen haubenartigen Abschnitt 13, von dem aus sich zwei seitliche Fortsätze 14 in Wischarmlängsrichtung erstrecken. In die an dem haubenartigen Abschnitt 13 angrenzenden Bereiche der Fortsätze 14 sind zwei miteinander fluchtende Bohrungen 15 eingelassen, durch welche eine von einem Gelenkniet 16 realisierte Schwenkachse verläuft. Um die seitlich aus den Fortsätzen 14 vorstehenden Bereiche des Gelenkniets 16 ist das im Querschnitt etwa C-förmige Gelenkteil 17 des Wischarms 10, das zwei durch einen Steg 18 miteinander verbundene Seitenwangen 19 aufweist, mittels derselben schwenkbar gelagert ist. An dem dem Gelenkniet 16 fernen Ende des Gelenkteils 17 ist über eine Wischstange und ein Verbindungsstück ein Wischblatt angelenkt (nicht dargestellt).

Der haubenartige Abschnitt 13 des Befestigungsteils 12 besitzt eine nach unten hin offene Ausnehmung 20. Die Ausnehmung 20 ist oben durch eine plattenförmige Oberwand 21, seitlich durch zwei parallel zur Wischarmlängsrichtung L verlaufende plattenförmige Seitenwände 22, vorne durch eine später näher beschriebene Vorderwand 23 und hinten durch eine nach außen gerundete Hinterwand 24 begrenzt. Die Ausnehmung 20 besitzt somit an der Hinterwand 24 einen runden Bereich.

Die Wischerwelle 11 ist an ihrem durch eine Öffnung 25 in der Karosserie 26 des Kraftfahrzeugs ragenden zylindrischen Ende 27, das einen gerändelten Bereich 28 aufweist und ober- und unterhalb dieses gerändelten Bereichs 28 mit jeweils einer Ringnut 29 versehen ist, mit einer Anspritzung 30 aus einem Kunststoff versehen. Die Anspritzung 30 besitzt an einer Stelle, die mittig der Breitenerstreckung B, aber nicht mittig der Längenerstreckung L der Anspritzung 30, sondern weiter vorne liegt, eine in Richtung der Höhenerstreckung H verlaufende zylindrische Nabe 31. Die Nabe 31 umgibt das Wischerwellenende 27 formschlüssig. Die Anspritzung 30 ist somit als Teil der Wischerwelle 30 anzusehen.

Im übrigen ist die Anspritzung 30 der Wischerwelle 11 in der Gestalt derjenigen der Ausnehmung 20 im Befestigungsteil 12 des Wischarms 10 angepaßt. So hat die Anspritzung 30 eine plattenförmige Oberwand 32, zwei plattenförmige Seitenwände 33, vorne eine Vorderwand 34 und hinten eine nach außen gerundete Hinterwand 35. Die Wände 33 bis 35 besitzen alle die gleiche, nach hinten hin abnehmende Höhe H, welche überall kleiner als diejenige der Nabe 31 und der Ausnehmung 20 ist. Die Oberwand 32 der Anspritzung 30 verläuft somit auf Abstand zur Oberwand 21 des Befestigungsteils 12. Die Vorderwand 34 erstreckt sich im wesentlichen quer zur Wischarmlängsrichtung bzw. Wischarmlängsachse L. Sie grenzt unmittelbar an die Nabe 31 an und geht mittig in diese über. Die von der Nabe 31 beabstandeten Wände 33 und 35 sind über Stege 36 mit der Nabe 31 und mit der Oberwand 32 verbunden. Die Seitenwände 33 liegen mit gerundeten Schultern 37 dicht an den Innenseiten der Seitenwände 22 des Befestigungsteils 12 an. Die gerundete Hinterwand 25 der Anspritzung 30 ist außen mit einer Längsverzahnung 38 versehen und greift in eine entsprechend gestaltete Längsverzahnung 39 ein, welche die Hinterwand 24 des Befestigungsteils 12 an der Innenseite besitzt. Mittig ist aus der Hinterwand 24 an deren der Anspritzung 30 zugewandten Seite des Befestigungsteils 12 ein Rastlappen 40 ausgeschnitten, der die Hinterwand 35 der Anspritzung 30 untergreift. Die Hinterwände 24 und 35 sind leicht geneigt, so daß sie jeweils einen sich zum Wischerwellenende 27 hin verjüngenden Teilkonus umschreiben, dessen Neigungswinkel N etwa zwei Grad beträgt. Die Hinterwand 24 des Befestigungsteils 12 erstreckt sich dabei über einen größeren Winkelbereich als die Hinterwand 35 der Anspritzung 30, was später näher erläutert wird. Die in den seitlichen Bereichen der relativ dick ausgebildeten Hinterwand 24 des Befestigungsteils 12 vorgesehenen Sacklöcher 41 sind fertigungsbedingt.

Dem mittigen Bereich 42 der Hinterwand 35 der Anspritzung 30 bezüglich des Wischerwellenmittelpunkts 43 (Fig. 2) diametral gegenüberliegend ist an der Vorderwand 34 der Anspritzung 30 ein kugelförmiger Ansatz 44 angeformt. Der Mittelpunkt 45 des kugelförmigen Ansatzes 44 liegt auf der Wischarmlängsachse L und auf einer zur Wischerwellenachse 46 (Fig. 1) parallelen Linie 47. Der Mittelpunkt 45 ist auch Mittelpunkt des Radius R der gerundeten bzw. konischen Hinterwand 35 und auch Mittelpunkt des Radius der Schultern 37 der Anspritzung 30. Der kugelförmige Ansatz 44 erstreckt sich nicht über die gesamte Ausdehnung B der Anspritzung 30, d. h. quer zur Wischarmlängsrichtung L, sondern nur etwa über ein Viertel der Ausdehnung B und auch nicht über die Höhe H der Vorderwand 34 der Anspritzung 30. An seinem an die Vorderwand 34 angrenzenden Bereich ist der kugelförmige Ansatz 44 in zwei Seitenabschnitte 48 der Vorderwand 34 eingebettet, welche im Schnitt jeweils einem rechtwinkligen Dreieck gleichen, dessen Ankathete 48a auf der den Mittelpunkt 45 des kugelförmigen Ansatzes 44 schneidenden Breitenlinie B liegt. Der Winkel 49 zwischen der Ankathete 48a und der Hypothenuse 48b des Dreiecks beträgt etwa 10°.

Der kugelförmige Ansatz 44 greift in eine in der Vorderwand 23 des Befestigungsteils 12 ausgebildete Kugelschale 50 ein. Die Kugelschale 50 erstreckt sich nicht über die gesamte Höhe der Vorderwand 23. Unterhalb der Kugelschale 50 erstreckt sich über die gesamte Breite der Vorderwand 23 ein Wulst 23a, der den Ansatz 44 über seine radiale Ausdehnung hinaus untergreift. Der Mittelpunkt 51 der Kugelschale 50, der auch der Mittelpunkt des geringfügig größer als der Radius R der Hinterwand 35 der Anspritzung 30 bemessenen Radius R1 der Befestigungsteilhinterwand 24 sein kann, fällt nicht mit dem Mittelpunkt 45 des Ansatzes 44 zusammen. Der Mittelpunkt 51 liegt in einem gedachten Koordinatensystem, dessen Nullpunkt mit dem Mittelpunkt 45 zusammenfällt und dessen x-Achse auf der Wischarmlängsachse L liegt und dessen y-Achse mit der parallel zur Wischerwellenachse 46 verlaufenden Linie 47 zusammenfällt, im + x-y-Quadranten (in Fig. 1 übertrieben dargestellt). Hierdurch wird ein sicherer Halt des Befestigungsteils 12 durch Klemmung auf der Anspritzung 30 und damit auf der Wischerwelle 11 erreicht. Der zuvor beschriebene Rastlappen 40 trägt zur Sicherung bei. Die Drehmomentübertragung von der Wischerwelle 11 auf den Wischarm 10 findet dabei über die seitlichen Schultern 37 auf der Anspritzung 30 und über die Verzahnungen 38 und 39 statt.

Ein weiteres Mittel zur Sicherung der Klemmverbindung zwischen Wischerwelle 11 und Befestigungsteil 12 sind die beiden Wischblatt-Anpreßdruckfedern 52. Die Anpreßdruckfedern 52 sind hier als Schenkelfedern ausgebildet. Sie sind gegenläufig zueinander und achsparallel zum Gelenkniet 16, d.h. zur Schwenkachse zwischen dem Befestigungsteil 12 und dem Gelenkteil 17 auf einer sich quer zur Wischarmlängsachse L erstreckenden Achse 53 gelagert. Die Achse 53 ist beidendig in nach unten hin offenen, U-förmigen Ausnehmungen 54 gelagert, welche in die Innenseiten der Fortsätze 14 des Befestigungsteils 10 eingelassen sind. Die Schenkelfedern 52 stützen sich mit ihren ersten, seitlich und nahe der Wischarmlängsachse L verlaufenden Schenkeln 55 am Gelenkniet 16 ab. Mit ihren zweiten, seitlich und fern der Wischarmlängsachse L verlaufenden Schenkeln 56 stützen sie sich an einem Stift 57 ab, welcher sich quer zur Wischarmlängsrichtung 36 erstreckt und in Bohrungen 58 in den Seitenwangen 19 des Gelenkteils 17 steckt.

Wie die Fig. 1 weiter zeigt, besitzen die Schenkel 56 nach oben hin abgebogene freie Enden 59. Diese wirken als Anschlag, der mit dem Steg 18 des Gelenkteils 17 bei dessen Bewegen in die Abklappstellung zum Wischblattwechsel etc. (nicht dargestellt) zusammenwirkt. Der Rastlappen 40 sichert dabei den Halt des Befestigungsteils 12 auf der Anspritzung 30 der Wischerwelle 11.

Wie zuvor erwähnt, erstreckt sich die Hinterwand 24 des Befestigungsteils 12 über einen größeren Winkelbereich als die Hinterwand 35 der Anspritzung 30. Und zwar erstreckt sich, wie die Fig. 1 zeigt, die Hinterwand 35 über einen Winkelbereich X, dessen Scheitelpunkt mit dem Mittelpunkt 45 des kugelförmigen Ansatzes 44 zusammenfällt, von etwa 40° und die Verzahnung 39 der Hinterwand 24 über einen Winkelbereich Z von etwa 60°.

Wie zuvor beschrieben, erstrecken sich seitlich des kugelförmigen Ansatzes 44 dreieckige Seitenabschnitte 48 der Vorderwand 34 der Umspritzung 30. Die sich seitlich der Kugelschale 50 erstreckenden Bereiche der Vorderwand 23 des Befestigungsteils 12 sind derart angeordnet, daß ihre der Anspritzung 30 zugewandten Flächen 60 einen Winkel 61 mit der den Mittelpunkt 45 des kugelförmigen Ansatzes 44 schneidenden Breitenlinie 8 einschließen, der etwa 20° beträgt. Es steht somit beidseitig des kugelförmigen Ansatzes 44 ein etwa 10 Winkelgrad betragender Bereich 62 der Ausnehmung 20 im Befestigungsteil 12 frei, der somit der sich aufgrund der zuvor beschriebenen unterschiedlichen Winkelbereiche X und Z ergebenden Winkelbereichsdifferenz von 10° zwischen der Innenfläche jeder Seitenwand 33 der Anspritzung 30 und der ihre benachbarten Innenfläche der Seitenwand 33 des Befestigungsteils 12 entspricht. Dadurch und weil die Wände 24 und 35 sowie die Schultern 37 konisch sind, ist nach dem Lösen des Rastlappens 40 auf einfache Weise nach Verkippen des Befestigungsteils 12 in Richtung der Höhenerstreckung H durch Drehen des Befestigungsteils 12 um den kugelförmigen Ansatz 44 und damit auch in Wischerwellenradialrichtung r eine weitreichende Lagekorrektur des Wischarms 10 auf der Anspritzung 30 und damit auf der Wischerwelle 11 möglich, so daß fahrzeugbedingte bzw. einbaubedingte Lagetoleranzen des Wischarms 10 bzw. des Wischfeldes ausgeglichen werden können. Die Teile 12 und 30 sind dabei aufgrund der zuvor beschriebenen konischen Gestalt der Wände 24 und 35 und der Tatsache, daß die Wand 32 auf Abstand zur Wand 21 verläuft, problemlos in Richtung der Höhenerstreckung H gegeneinander beweglich. Der kugelförmige Ansatz 44 und die Kugelschale 50 gleichen dabei einem Kugelgelenk. Trotz des Vorhandenseins eines solchen Gelenks zwischen Wischerwelle 11 und Befestigungsteil 12 ist aber aufgrund der zuvor beschriebenen Klemmverbindungen während des Wischerbetriebs immer eine einwandfreie Drehmomentübertragung von der Wischerwelle 11 auf das Befestigungsteil 12 und damit auf den ganzen Wischarm 10 gewährleistet.

Zu erwähnen ist noch, daß das sich aufgrund der zuvor beschriebenen haubenartigen Gestalt des Befestigungsteils 12 das Anbringen einer Abdeckkappe für den Wischerwellenbereich erübrigt. Ebenfalls ist erwähnenswert, daß aufgrund der zuvor bestimmten plattenartigen und damit flachen Ausbildung der Befestigungsteiloberwand 21 eine vorteilhafte, niedrige Wischarmbauweise im Befestigungsteilbereich gegeben ist.

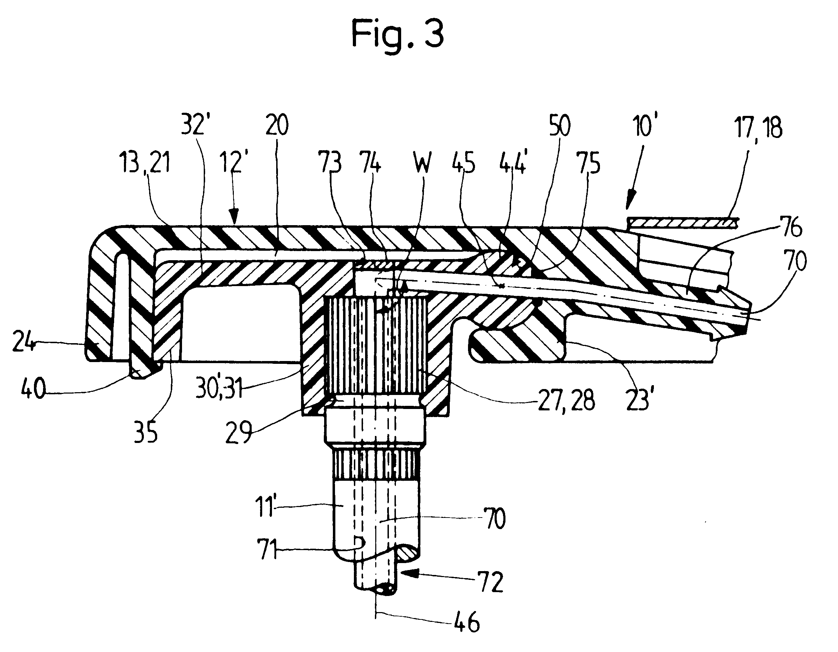

Der in Fig. 3 dargestellte Wischarm 10′ gleicht im wesentlichen dem zuvor dargestellten Wischarm 10. Gleiche Teile sind demgemäß mit gleichen Bezugszeichen wie dort bezeichnet, bezüglich ihrer Beschreibung wird auf die der Fig. 1 und 2 verwiesen. So besitzt sein Befestigungsteil 12′ eine nach unten hin offene Ausnehmung 20 mit einer Kugelschale 50 und die Wischerwelle 11′ eine Anspritzung 30′ mit einem kugelförmigen Ansatz 44′. Insgesamt ist das Befestigungsteil 12′ auf genau die gleiche vorteilhafte Weise auf der Anspritzung 30′ befestigt wie das Befestigungsteil 12 auf der Anspritzung 30 bbei der Ausführungsform nach den Fig. 1 und 2. Die in Fig. 3 dargestellte Baueinheit besitzt zusätzlich noch eine besonders vorteilhafte Waschflüssigkeitsführung mit einem Waschflüssigkeitskanal 70, der sich zunächst durch die Wischerwelle 11′ erstreckt. Hierzu ist die Wischerwelle 11′ über die gesamte Länge mit einer zentrischen Bohrung 71 versehen, in die ein Kunststoffrohr 72 eingeklemmt ist, das unten aus der Wischerwelle 11′ ragt und einen Anschlußstutzen für einen zu einem Waschflüssigkeitsbehälter führenden Schlauch besitzt (nicht dargestellt). Oben schließt das Rohr 72 mit dem Wischerwellenende 27, 28 ab. Weiter erstreckt sich der Waschflüssigkeitskanal 70 durch die plattenförmige Oberwand 32′ und den kugelförmigen Ansatz 44′ der Anspritzung 30′, und zwar durch dessen Mittelpunkt 45. Im Übergangsbereich von Wischerwelle 11′ und Anspritzung 30′ beschreibt er einen Winkel W von etwa 80°. Der Waschflüssigkeitskanal 70 ist in der Anspritzung 30′ mit Hilfe eines Werkzeugteils geschaffen worden, welches durch eine Öffnung 73 in der Oberwand 32′ der Anspritzung 30′ zurückgezogen wurde. Anschließend ist die Öffnung 73 mit einem einklipsbaren Deckel 74 verschlossen worden. Selbstverständlich können die Öffnung 73 und der Deckel 74 bei einem anderen Fertigungsverfahren entfallen.

Anschließend setzt sich der Waschflüssigkeitskanal 70 durch die die Kugelschale 50 bildende Vorderwand 23′ des Befestigungsteils 12′ fort. Im Übergangsbereich von Ansatz 44′ und Kugelschale 50 ist der Waschflüssigkeitskanal 70 durch einen O-Ring 75 abgedichtet. Andererseits wäre es auch möglich gewesen, am Ansatz 44′ und/oder an der Wand 23′ einstückig Dichtlippen anzuformen. Der Waschflüssigkeitskanal 70 endet in einem Anschlußstutzen 76, welcher einstückig an die Vorderwand 23′ angeformt ist. Der Anschlußstutzen 76 liegt dabei mittig der Breitenerstreckung des Wischarms 10′ und endet schräg unterhalb des Steges 18 des Wischarmgelenkteils 17. Daher kann an ihm problemlos ein Schlauch angeschlossen werden, der geschützt im Gelenkteilinnern zur nicht dargestellten Wischstange geführt werden kann, wo die Waschflüssigkeitsverteilung über eine Düse erfolgen kann.

Die beschriebene Art der Waschflüssigkeitsführung besitzt den Vorteil, daß eine Naßreinigung der zu reinigenden Scheibe bei unterschiedlichen Lageeinstellungen von Wischarm und Befestigungsteil 12′ und Wischerwelle 11′ möglich ist. Ermöglicht wird das durch die kugeligen Bereiche 44′ und 50. Weiterhin beitet sie den Vorteil, daß unmittelbar mit der Wischarmbefestigung auch eine Leitung für die Waschflüssigkeit geschaffen wird, die außerdem über wichtige Bereiche geschützt im Innern von Bauteilen verläuft.

**Patentansprüche**

1. Wischarm (10, 10'), insbesondere für Kraftfahrzeug-Scheibenwischeranlagen, mit einem auf eine Wischerwelle (11, 11') aufklemmbaren Befestigungsteil (12, 12'), welches die Wischerwelle (11, 11') mit einer Ausnehmung (20) umgibt, die an einer Seite von einem runden Bereich (24) des Befestigungsteils (12, 12') begrenzt wird, das mit diesem Bereich (24) an einem runden Bereich (35) eines der Wischerwelle (11, 11') zugehörigen Teils (30, 30') anliegt, dadurch gekennzeichnet, daß an einem dem runden Bereich (35) wenigstens annähernd diametral gegenüberliegenden Bereich eines der beiden Teile (30) ein wenigstens annähernd kugelförmiger Ansatz (44, 44′) vorgesehen ist, welcher zum Eingriff in eine am anderen Teil (12, 12') vorgesehene Kugelschale (50) dient.

2. Wischarm (10, 10') nach Anspruch 1, dadurch gekennzeichnet, daß das der Wischerwelle (11) zugehörige Teil (30, 30') bereichsweise auf Abstand zu einigen Begrenzungen (21, 22, 23) der Ausnehmung (20) im Befestigungsteil (12, 12') verläuft.

3. Wischarm (10, 10') nach Anspruch 2, dadurch gekennzeichnet, daß sich der runde Bereich (24) des Befestigungsteils (12, 12') über einen größeren Winkelbereich erstreckt als derjenige des der Wischerwelle (11, 11') zugehörigen Teils (30, 30').

4. Wischarm (10, 10') nach einem der vorhergehenden Ansprüche, dadurch gekennzeichnet, daß sich der Ansatz (44, 44') nur über einen gewissen Teil der Ausdehnung(en) (B, H) des Wischarms (10, 10') senkrecht zur Wischarmlängsrichtung (L) erstreckt.

5. Wischarm (10, 10') nach Anspruch 3 und 4, dadurch gekennzeichnet, daß beidseitig des Ansatzes (44, 44′) jeweils ein auf die Winkelbereichsdifferenz zwischen dem der Wischerwelle (11, 11') zugehörigen Teil (30, 30', 35) und dem Befestigungsteil (12, 12', 24) abgestimmter Bereich (62) der Ausnehmung (20) freisteht.

6. Wischarm (10, 10') nach wenigstens einem der vorhergehenden Ansprüche, dadurch gekennzeichnet, daß der Ansatz (44, 44') an dem der Wischerwelle (11, 11') zugehörigen Teil (30) und die Kugelschale (50) am Befestigungsteil (12, 12') vorgesehen ist.

7. Wischarm (10, 10') nach wenigstens einem der vorhergehenden Ansprüche, dadurch gekennzeichnet, daß das Teil (30) an die Wischerwelle (11, 11') angespritzt ist.

8. Wischarm (10, 10') nach wenigstens einem der vorhergehenden Ansprüche, dadurch gekennzeichnet, daß das der Wischerwelle (11, 11') zugehörige Teil (30, 30') und das Befestigungsteil (12, 12') durch eine etwa in Radialrichtung (r) der Wischerwelle (11, 11') wirkende Klemmverbindung in ihrer gegenseitigen Lage sicherbar sind.

9. Wischarm (10, 10') nach wenigstens einem der vorhergehenden Ansprüche, dadurch gekennzeichnet, daß der Mittelpunkt (45) des runden Bereichs (35) des der Wischerwelle (11, 11') zugehörigen Teils (30) nicht mit dem Mittelpunkt (51) des runden Bereichs (24) der Ausnehmung (20) zusammenfällt.

10. Wischarm (10, 10') nach wenigstens einem der vorhergehenden Ansprüche, dadurch gekennzeichnet, daß wenigstens einer der runden oder kugelförmigen Bereiche (24, 35) eine Verzahnung (39, 38) oder dergleichen aufweist.

11. Wischarm (10, 10') nach wenigstens einem der vorhergehenden Ansprüche, dadurch gekennzeichnet, daß wenigstens einer der runden oder kugelförmigen Bereiche (24, 35) konisch ausgebildet bzw. geneigt ist.

12. Wischarm (10, 10') nach Anspruch 11, dadurch gekennzeichnet, daß sich der Konus zum freien Wischerwellenende (27) hin verjüngt.

13. Wischarm (10) nach wenigstens einem der vorhergehenden Ansprüche, dadurch gekennzeichnet, daß die Wischerwelle (11) und das Befestigungsteil (12) über wenigstens eine Wischblatt-Anpreßdruckfeder (52) in ihrer gegenseitigen Lage zueinander sicherbar sind.

14. Wischarm (10) nach Anspruch 13, dadurch gekennzeichnet, daß wenigstens eine Schenkelfeder (52) achsparallel zur Schwenkachse (16) zwischen dem Befestigungsteil (12) und dem um die Schwenkachse (16) schwenkbar gelagerten Gelenkteil (17) vorgesehen ist, welche sich einerseits am Befestigungsteil (12, 16) und andererseits am Gelenkteil (17, 57) abstützt.

15. Wischarm (10) nach Anspruch 14, dadurch gekennzeichnet, daß die Schenkelfeder (52) auf einer sich wenigstens annähernd quer zur Wischarmlängsrichtung (36) erstreckenden Achse (53) im Befestigungsteil (12) gelagert ist.

16. Wischarm (10) nach Anspruch 13 oder 14, dadurch gekennzeichnet, daß sich die Schenkelfeder (52) mit einem Schenkel an der Schwenkachse (16) abstützt.

17. Wischarm (10) nach wenigstens einem der Ansprüche 14 bis 16, dadurch gekennzeichnet, daß sich die Schenkelfeder (52) mit einem Schenkel (56) an einem sich wenigstens annähernd quer zur Wischarmlängsrichtung (36) im Gelenkteil (17) erstreckenden Bauteil (57) abstützt.

18. Wischarm (10) nach wenigstens einem der Ansprüche 14 bis 17, dadurch gekennzeichnet, daß zwei Schenkelfedern (52) gegenläufig angeordnet sind.

19. Wischarm (10) nach wenigstens einem der Ansprüche 14 bis 18, dadurch gekennzeichnet, daß ein Schenkel (56) der Schenkelfeder (52) das Gelenkteil (17) in seiner Abklappstellung abstützt.

20. Wischarm (10') nach wenigstens einem der vorhergehenden Ansprüche, dadurch gekennzeichnet, daß sich wenigstens ein Waschflüssigkeitskanal (70) durch den Ansatz (44') und die die Kugelschale (50) bildende Wand (23') erstreckt.

21. Wischarm (10') nach Anspruch 20, dadurch gekennzeichnet, daß der Waschflüssigkeitskanal (70) in dem (den) Übergangsbereich(en) zwischen Ansatz (44') und Wand (23') abgedichtet ist.

22. Wischarm (10') nach Anspruch 20 oder 21, dadurch gekennzeichnet, daß sich der Waschflüssigkeitskanal (70) durch die Wischerwelle (11') erstreckt.

23. Wischarm (10') nach einem der Ansprüche 20 bis 22, dadurch gekennzeichnet, daß der Waschflüssigkeitskanal (70) von Kunststoffteilen (72, 30, 12) realisiert ist.

24. Wischarm (10') nach wenigstens einem der Ansprüche 20 bis 23, dadurch gekennzeichnet, daß wenigstens ein Waschflüssigkeitskanal (70) im Bereich des Befestigungsteils (12) in einem Anschlußstutzen (76) endet.

25. Wischarm (10') nach wenigstens einem der Ansprüche 20 bis 24, dadurch gekennzeichnet, daß wenigstens ein Waschflüssigkeitskanal im Bereich des Befestigungsteils in einer Düse endet.

**Claims**

1. A wiper arm (10, 10'), in particular for motor vehicle windscreen wiper systems, comprising a fastening member (12, 12') to be clipped onto a wiper shaft (11, 11'), which fastening member surrounds the wiper shaft (11, 11') by means of a recess (20) which on one side is bordered by a round area (24) of the fastening member (12, 12'), which fastening member by means of this area (24) rests against a round area (35) of a part (30, 30') pertaining to the wiper shaft (11, 11'), characterised in that on one area at least substantially diametrically opposite to the round area (35) of one of the two parts (30) an at least substantially ball-shaped stud (44, 44') is provided, which stud serves to engage into a ball cup (50) provided on the other part (12, 12').

2. A wiper arm (10, 10') according to claim 1, characterised in that the part (30, 30') pertaining to the wiper shaft (11) extends in sections with a spacing from some limitations (21, 22, 23) of the recess (20) in the fastening member (12, 12').

3. A wiper arm (10, 10') according to claim 2, characterised in that the round area (24) of the fastening member (12, 12') extends over a larger angular area than that of the part (30, 30') pertaining to the wiper shaft (11, 11').

4. A wiper arm (10, 10') according to one of the preceding claims, characterised in that the stud (44, 44') extends only perpendicularly to the longitudinal direction (L) of the wiper arm over a certain extent/certain extents (B, H) of the wiper arm (10, 10').

5. A wiper arm (10, 10') according to claim 3 and 4, characterised in that on both sides of the stud (44, 44') an area (62) of the recess (20) is uncovered and in each case adapted to the difference of the angular area between the part (30, 30', 35) pertaining to the wiper shaft (11) and the fastening member (12, 12', 24).

6. A wiper arm (10, 10') according to at least one of the preceding claims, characterised in that the stud (44, 44') is provided on the part (30) pertaining to the wiper shaft (11, 11') and the ball cup (50) on the fastening member (12, 12').

7. A wiper arm (10, 10') according to at least one of the preceding claims, characterised in that the part (30) is injection-moulded onto the wiper shaft (11, 11').

8. A wiper arm (10, 10') according to at least one of the preceding claims, characterised in that the part (30, 30') pertaining to the wiper shaft (11, 11') and the fastening member (12, 12') may be secured in their position relative to each other by a clamping joint being effective approximately in the radial direction (r) of the wiper shaft (11, 11').

9. A wiper arm (10, 10') according to at least one of the preceding claims, characterised in that the centre (45) of the round area (35) of the part (30) pertaining to the wiper shaft (11, 11') does not coincide with the centre (51) of the round area (24) of the recess (20).

10. A wiper arm (10, 10') according to at least one of the preceding claims, characterised in that at least one of the round or ball-shaped areas (24, 35) is provided with teeth (39, 38) or the like.

11. A wiper arm (10, 10') according to at least one of the preceding claims, characterised in that at least one of the round or ball-shaped areas (24, 35) is formed conically or is inclined.

12. A wiper arm (10, 10') according to claim 11, characterised in that the cone tapers towards the free end (27) of the wiper shaft.

13. A wiper arm (10) according to at least one of the preceding claims, characterised in that the wiper shaft (11) and the fastening member (12) may be secured in their position relative to each other by at least one wiper blade contact pressure spring (52).

14. A wiper arm (10) according to claim 13, characterised in that at least one leg spring (52) is provided axially parallel to the swivelling axis (16) between the fastening member (12) and the link (17) mounted to be swivelled about the swivelling axis (16) on the one hand supported on the fastening member (12, 16) and on the other hand on the link (17, 57).

15. A wiper arm (10) according to claim 14, characterised in that the leg spring (52) is supported on an axis (53) in the fastening member (12) extending at least substantially transversely to the longitudinal direction (36) of the wiper arm.

16. A wiper arm (10) according to claim 13 or 14, characterised in that the leg spring (52) is supported on the swivelling axis (16) by means of a leg.

17. A wiper arm (10) according to at least one of claims 14 to 16, characterised in that the leg spring (52) is supported by a leg (56) on a structural unit (57) extending in the link (17) at least substantially transversely to the longitudinal direction (36) of the wiper arm.

18. A wiper arm (10) according to at least one of claims 14 to 17, characterised in that two leg springs are arranged in opposed manner.

19. A wiper arm (10) according to at least one of claims 14 to 18, characterised in that the link (17) in its tilted position is supported by one leg (56) of the leg spring (52).

20. A wiper arm (10') according to one of the preceding claims, characterised in that through the stud (44') and the wall (23') forming the ball cup (50) extends at least one washing liquid channel (70).

21. A wiper arm (10') according to claim 20, characterised in that the washing liquid channel (70) is sealed in the passage(s) between stud (44') and wall (23').

22. A wiper arm (10') according to claim 20 or 21, characterised in that the washing liquid channel (70) extends through the wiper shaft (11').

23. A wiper arm (10') according to one of claims 20 to 22, characterised in that the washing liquid channel (70) is realised by plastic parts (72, 30, 12).

24. A wiper arm (10') according to at least one of claims 20 to 23, characterised in that at least one washing liquid channel (70) ends in a pipe union (76) in the vicinity of the fastening member (12).

25. A wiper arm (10') according to at least one of claims 20 to 24, characterised in that at least one washing liquid channel ends in a nozzle in the vicinitiy of the fastening member.

**Revendications**

1. Bras d'essuie-glace (10,10'), notamment pour des installations d'essuie-glaces de véhicules automobiles, comportant un élément de fixation (12,12'), qui peut être bloqué par serrage sur un arbre (11,11') de l'essuie-glace et entoure l'arbre (11,11') de l'essuie-glace par un évidement (20), qui est limité, d'un côté, par une partie circulaire (24) de l'élément de fixation (12,12'), qui s'applique, par la partie (24) contre une partie circulaire (35) d'un élément (30,30') associé à l'arbre (11,11') de l'essuie-glace, caractérisé en ce que sur une partie, au moins approximativement diamétralement opposée à la partie circulaire (35), de l'un des deux éléments (30), il est prévu au moins une partie saillante au moins approximativement sphérique (44,44'), qui est destinée à s'engager dans une coque sphérique (50) prévue sur l'autre élément (12,12').

2. Bras d'essuie-glace (10,10') selon la revendication 1, caractérisé en ce que l'élément (30,30') associé à l'arbre (11) de l'essuie-glace s'étend, par endroits, à distance de quelques limites (21,22,23) de l'évidement (20) ménagé dans l'élément de fixation (12,12').

3. Bras d'essuie-glace (10,10') selon la revendication 2, caractérisé en ce que la partie circulaire (24) de l'élément de fixation (12,12') s'étend sur une zone angulaire plus étendue que celle de l'élément (30,30') associé à l'arbre (11,11') de l'essuie-glace.

4. Bras d'essuie-glace (10,10') selon l'une des revendications précédentes, caractérisé en ce que la partie (44,44') s'étend uniquement sur une certaine partie du ou des évidements (B,H) du bras d'essuie-glace (10,10'), perpendiculairement à la direction longitudinale (L) de ce bras.

5. Bras d'essuie-glace (10,10') selon les revendications 3 et 4, caractérisé en ce que respectivement une partie (62) de l'évidement (20), qui est réglée sur la différence entre les zones angulaires de l'élément (30,30',35) associé à l'arbre (11,11') de l'essuie-glace et de l'élément de fixation (12,12',24), reste dégagée des deux côtés de la partie saillante (44,44').

6. Bras d'essuie-glace (10,10') selon au moins l'une des revendications précédentes, caractérisé en ce que la partie saillante (44,44') est prévue sur l'élément (30) associé à l'arbre (11,11') de l'essuie-glace et que la coque sphérique (50) est prévue sur l'élément de fixation (12,12').

7. Bras d'essuie-glace (10,10') selon au moins l'une des revendications précédentes, caractérisé en ce que l'élément (30) est formé par moulage par injection sur l'arbre (11,11') de l'essuie-glace.

8. Bras d'essuie-glace (10,10') selon au moins l'une des revendications précédentes, caractérisé en ce que l'élément (30,30') associé à l'arbre (11,11') de l'essuie-glace et l'élément de fixation (12,12') peuvent être bloqués, dans leur position relative au moyen d'une liaison avec serrage agissant approximativement dans la direction radiale (r) de l'arbre (11,11') de l'essuie-glace.

9. Bras d'essuie-glace (10,10') selon au moins l'une des revendications précédentes, caractérisé en ce que le centre (45) de la partie circulaire (35) de l'élément (30) associé à l'arbre (11,11') de l'essuie-glace ne coïncide pas avec le centre (51) de la partie circulaire (24) de l'évidement (20).

10. Bras d'essuie-glace (10,10') selon au moins l'une des revendications précédentes, caractérisé en ce qu'au moins l'une des parties circulaires ou sphériques (24,35) possède une denture (39,38) ou analogue.

**11.** Bras d'essuie-glace (10,10') selon au moins l'une des revendications précédentes, caractérisé en ce qu'au moins l'une des parties circulaires ou sphériques (24,35) possède une forme conique ou est inclinée.

**12.** Bras d'essuie-glace (10,10') selon la revendication 11, caractérisé en ce que le cône se rétrécit en direction de l'extrémité libre (27) de l'arbre de l'essuie-glace.

**13.** Bras d'essuie-glace (10,10') selon au moins l'une des revendications précédentes, caractérisé en ce que l'arbre (11) de l'essuie-glace et l'élément de fixation (12) peuvent être bloqués dans leur position réciproque par l'intermédiaire d'au moins un ressort (52) de compression du balai d'essuie-glace.

**14.** Bras d'essuie-glace (10) selon la revendication 13, caractérisé en ce qu'au moins un ressort à branches (52) est prévu parallèlement à l'axe de pivotement (16) entre l'élément de fixation (12) et l'élément d'articulation (17) monté de manière à pouvoir pivoter autour de l'axe de pivotement (16), ce ressort prenant appui d'une part sur l'élément de fixation (12,16) et d'autre part sur l'élément d'articulation (17,57).

**15.** Bras d'essuie-glace (10) selon la revendication 14, caractérisé en ce que le ressort à branches (52) est monté sur un axe (53), qui s'étend au moins approximativement transversalement par rapport à la direction longitudinale (36) du bras d'essuie-glace, dans l'élément de fixation (12).

**16.** Bras d'essuie-glace (10) selon la revendication 13 ou 14, caractérisé en ce que le ressort à branches (52) prend appui par une branche sur l'axe de pivotement (16).

**17.** Bras d'essuie-glace (10) selon au moins l'une des revendications 14 à 16, caractérisé en ce que le ressort à branches (52) prend appui par une branche (56) sur un composant (57) qui s'étend au moins approximativement transversalement par rapport à la direction longitudinale (36) du bras d'essuie-glace dans l'élément d'articulation (17).

**18.** Bras d'essuie-glace (10) selon au moins l'une des revendications 14 à 17, caractérisé en ce que deux ressorts à branches (52) sont disposés en étant dirigés en des sens opposés.

**19.** Bras d'essuie-glace (10) selon au moins l'une des revendications 14 à 18, caractérisé en ce qu'une branche (56) du ressort à branches (52) supporte l'élément d'articulation (17) dans une position écartée par rabattement.

**20.** Bras d'essuie-glace (10') selon au moins l'une des revendications précédentes, caractérisé en ce qu'au moins un canal (70) prévu pour le liquide de lavage s'étend à travers la partie saillante (44') et la paroi (23') formant la coque sphérique (50).

**21.** Bras d'essuie-glace (10') selon la revendication 20, caractérisé en ce que le canal (70) prévu pour le liquide de lavage est fermé de façon étanche dans la(les) zone(s) de jonction entre la partie saillante (44') et la paroi (23').

**22.** Bras d'essuie-glace (10') selon la revendication 20 ou 21, caractérisé en ce que le canal (70) prévu pour le liquide de lavage s'étend à travers l'arbre (11) de l'essuie-glace.

**23.** Bras d'essuie-glace (10') selon l'une des revendications 20 à 22, caractérisé en ce que le canal (70) pour le liquide de lavage est constitué par des pièces en matière plastique (72,30,12).

**24.** Bras d'essuie-glace (10') selon au moins l'une des revendications 20 à 23, caractérisé en ce qu'au moins un canal (70) prévu pour le liquide de lavage se termine, dans la zone de l'élément de fixation (12), par un embout de raccordement (76).

**25.** Bras d'essuie-glace (10') selon au moins l'une des revendications 20 à 24, caractérisé en ce qu'au moins un canal prévu pour le liquide de lavage se termine, dans la zone de l'élément de fixation, par une buse.

Fig. 1

Fig. 2

# Fig. 3

EP 0 317 856 B1